(19) Europäisches Patentamt
European Patent Office
Office européen des brevets

(11) Veröffentlichungsnummer: **0 166 959**
**B1**

(12) # EUROPÄISCHE PATENTSCHRIFT

(45) Veröffentlichungstag der Patentschrift: **04.01.89**

(51) Int. Cl.⁴: **B 65 G 53/46**, B 65 G 53/10

(21) Anmeldenummer: **85106498.0**

(22) Anmeldetag: **25.05.85**

(54) **Vorrichtung zur Steuerung eines Schleusvorganges für ein Haufwerk von Schüttgutpartikeln.**

(30) Priorität: **02.06.84 DE 3420616**

(43) Veröffentlichungstag der Anmeldung: **08.01.86 Patentblatt 86/2**

(45) Bekanntmachung des Hinweises auf die Patenterteilung: **04.01.89 Patentblatt 89/1**

(84) Benannte Vertragsstaaten: **AT BE CH FR IT LI LU NL SE**

(56) Entgegenhaltungen:
**CH-A-492 624**
**DD-A-205 861**
**DE-A-2 203 762**
**DE-A-2 353 288**
**DE-A-3 144 592**
**FR-A-2 219 894**
**US-A-4 111 492**

(73) Patentinhaber: **Alb. Klein GmbH & Co. KG, Postfach 27, D-5241 Niederfischbach (DE)**

(72) Erfinder: **Federhen, Bernd, D-5900 Siegen 21 (DE)**
Erfinder: **May, Manfred, D-5241 Niederfischbach (DE)**
Erfinder: **Müller.- Späth, Gerhard, D-5905 Freudenberg- Oberfischbach (DE)**

(74) Vertreter: **Hiebsch, Gerhard F., Dipl.- Ing., Erzbergerstrasse 5A Postfach 464, D-7700 Singen 1 (DE)**

EP 0 166 959 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine Vorrichtung zum Einschleusen eines Schüttgutes aus einem Vorratsbehälter über einen Schleusenraum in eine pneumatische Förderleitung, wobei der Schleusenraum wechselweise mittels eines bewegbaren Verschlußkopfes und diesem gegenüberliegender ringförmiger Dichtkante als dessen Sitz gegen den Vorratsbehälter einerseits sowie durch ein an den horizontalen Rand des Austrages des Schleusenraumes anliegendes Verschlußelement gegen die Förderleitung hin anderseits verschließbar ist.

Eine solche Vorrichtung ist aus der DE-A-2 353 288 bekannt. Der Schleusenraum ist bei dieser bekannten Vorrichtung im Inneren von einer schlauchförmigen elastischen Membran gebildet, die durch besonders gesteuerte Luftzufuhr einerseits flach zusammengedrückt werden kann und anderseits, bei maximalem Volumen, satt am Mantel eines zylindrischen Schleusenraumes anliegt. Der Verschlußkopf gegen den Vorratsbehälter ist eine einfache Halbkugel, die durch einen Arbeitszylinder gesteuert wird. Dasselbe gilt für das untere Verschlußelement am Schleusenraum, das ebenfalls ein Verschlußkopf in Form einer durch einen Arbeitszylinder steuerbaren Halbkugel ist. Es ist unterhalb des unteren Verschlußkopfes ein Ringspalt vorgesehen, der durch ausgeblasenes Druckmittel den unteren Arbeitszylinder gegen Verschmutzen schützt.

Es ist keine Gewähr dafür gegeben, daß der obere bewegbare Verschlußkopf mit Sitz am Vorratsbehälter mit Hinsicht auf sichere Arbeitsweise frei von Schüttgut gehalten ist. Auch ist verhältnismäßig hoher Einsatz von Energie nötig, insbesondere da - abgesehen von der Membran des Schleusenraumes - auch der untere Verschlußkopf pneumatisch arbeitet.

Der Erfindung liegt deshalb - ausgehend von dieser DE-A-2 353 288 - die Aufgabe zugrunde, eine Vorrichtung zum nahezu kontinuierlichen Fördern von Schüttgütern zu schaffen, welche mit einem einfacheren Schleusenraum und einem einfacheren Verschlußelement an dessen Austrag auskommt. Darüber hinaus soll die Vorrichtung auch für Förderdrücke um 6 bar geeignet sein und es erlauben, die zum pneumatischen Fördern zugeführte Energie optimal zu nutzen, bei allen Betriebszuständen Betriebssicherheit zu gewährleisten und im wesentlichen verschleißfrei und billig zu arbeiten.

Zur Lösung dieser Aufgabe führt, daß die Dichtkante Teil einer elastischen Dichtung ist und diese eine Wand eines Zuführkanals fur einen zum Verschlußkopf gerichteten Luftschleier bildet sowie von der zugeführten Luft so verformbar ist, daß die Luft in Schließstellung des Verschlußkopfes in den Schleusenraum strömen kann, und daß das Verschlußelement gegen die Förderleitung als einends angelenkte Auslaufklappe ausgebildet ist, die von einem Kraftspeicher untergriffen sowie durch Druck im Schleusenraum zu öffnen ist.

An sich ist es aus der FR-A-2 219 894 bekannt, einen kleinen Ringraum an einer beweglichen Platte vorzusehen, die mit dem Verschlußkopf zum Vorratsbehälter zusammen beweglich ist. Diese Platte soll vor dem Schließen der Vorrichtung gereinigt werden. Die Zufuhröffnung für die Spülluft ist an einem stationären Teil angebracht, und die Spülung erfolgt erst bei Beginn der Deckung der Teile, was eine komplizierte Anordnung ergibt. Die Spülluft strömt ungenutzt ab, muß abgestellt werden und kann nicht als Förderluft benutzt werden.

Außerdem ist an sich aus der US-A-4 111 492 eine Vorrichtung zum pneumatischen Fördern von Schüttgut bekannt, die am Austrag von zwei parallel geschalteten Tankräumen je eine einends angelenkte Auslaufklappe aufweist, die von einer Feder übergriffen ist. Der Rand der Austragsmündung ist dabei derart schräg angeordnet, daß, je nach Dichte des Schüttgutes, die Feder weggelassen werden kann. Die für den Betrieb benötigte Federkraft hängt u.a. vom Anstellwinkel der Austragsöffnung ab.

Bei der Vorrichtung nach der Erfindung wird die Auslaufklappe von dem Kraftspeicher, der als Schließfeder ausgebildet sein kann, und dem in der Förderleitung herrschenden Luftdruck auf den horizontalen Mündungsrand des Austrags gepreßt. Das Schüttgut läuft ein. Nach Ablauf der Füllzeit bläst in den ringförmigen Zufuhrkanal eingebrachte Luft - welche zum Verschlußkopf hin als Luftschleier austritt - den Raum um den Verschlußkopf produktfrei, der sich gleichzeitig anhebt und den Schleuseninnenraum gegen den Einlaufstutzen abdichtet. Die weiter zuströmende Luft baut im Schleusenraum den Förderdruck auf. Ist der Druck im Schleusenraum so hoch wie in der Förderleitung, so öffnet sich die Auslaufklappe (die Schließfeder ist entsprechend eingestellt), und das Schüttgut strömt in die Förderleitung. Wenn der Schüttgutspiegel unter die Auslaufklappe sinkt, wird diese von der Feder an den Mündungsrand des Austrages gehoben.

In die Füllphase wird also die Förderleitung gegen den Schleusenraum abgedichtet, während in der Förderleitung die Förderung weiterläuft. Schüttgut und Förderluft, welche in der Förderleitung vorhanden sind, bzw. in sie eingespeist werden, strömen auch in der Füllphase des Schleusenraumes zum Empfangsbehälter weiter. Die Vergleichsmäßigung des Förderstromes und die Verminderung der Abluftmenge führen zu einer erheblichen Energieeinsparung, wozu vor allem die beschriebene Auslaufklappe am Austrag des Schleusenraumes dient.

Besondere Weiterbildungen der Erfindung sind in den Unteransprüchen gekennzeichnet.

So kann der Auslaufklappe eine Luftzuführung für die Förderleitung nachgeschaltet sein.

Nach einem weiteren Merkmal der Erfindung ist der Zuführkanal eine Ringnut und die als Dichtungsring ausgebildete Dichtung steht unter Bildung eines Blasspaltes in Abstand zu einer Nutkante der Ringnut.

Die Dicke des Dichtungsringes an seiner Dichtkante kann dabei erfindungsgemäß größer als seine Dicke im radialen Abstand zur Dichtkante sein, was zur Folge hat, daß beim Anblasen des Dichtungsringes sich dieser geringfügig nach oben wölbt und mit einer ihn überspannenden Fläche, welche als Widerlager wirkt, jenen Blasspalt bildet.

Die beschriebene Bewegung des Dichtungsringes kann noch dadurch verbessert werden, daß er von U-förmigem Querschnitt ist und seine U-Schenkel jener Widerlagerfläche anliegen. Hierdurch entsteht ein Rinnenprofil, dessen freier Raum von einer dünnen, verhältnismäßig nachgiebigen Wandung begrenzt ist, gegen welche in beschriebener Weise die Blasluft geführt wird.

Als konstruktiv günstig hat es sich erwiesen, die Ringnut in einem Profilring anzuordnen und unter diesem ein Haltegerüst für den Verschlußkopf festzulegen, der bevorzugt schüsselartig ausgebildet ist und frei auf einem sich vertikal erstreckenden Träger aufliegt.

Zur besseren Entlüftung kann in Weiterbildung der Verschlußkopf eine zentrische Öffnung aufweisen, in welche eine Dichtspitze des Trägers einragt.

Vorteilhafterweise ist dann der Verschlußkopf in an sich bekannter Weise eine Kegelspitze, welche der Dichtspitze aus elastischem Werkstoff frei aufliegt.

Vorteilhafterweise ist der Träger ein Balgzylinder; die Ausbildung des Trägers als Balgzylinder hat den Vorzug, daß er zum einen mit jenem Strömungsmittel beaufschlagt wird, welches auch den Blasluftstrom erzeugt, so daß mittels eines einzigen Steuervorganges sowohl die vertikale Bewegung des Trägers als auch das Zublasen der Luft durchgeführt werden können. Zum anderen arbeitet dieser Balgzylinder im wesentlichen verschleißfrei.

Der Auslauf des Schleusenraumes wird von der Auslaufklappe gebildet, die in einer Weiterbildung in Verschlußstellung einem Sensor oder einem entsprechenden Aufnehmer gegenübersteht, welcher mit einem Steuerorgan für die Luftzufuhr an der Dichtkante einerseits sowie für den Träger anderseits verbunden ist, um die beschriebenen Vorgänge auszulösen. Darüber hinaus kann der Sensor mit einem Zeitrelais od. dgl. verbunden sein, um den Füllvorgang steuern zu können.

Dank der beschriebenen Maßgaben entsteht eine Vorrichtung zur pneumatischen Förderung von Schüttgütern, welche auch für Förderdrücke um 6 bar eingesetzt zu werden vermag, eine quasi kontinuierliche Förderung ermöglicht sowie aufgabengemäß einen einfachen, kostengünstigen Aufbau anbietet. Als wesentliche Merkmale sind anzusehen:

- kurze Füllzeit, kleine Baugröße, geringe Abluftmenge;
- ein sicherer und druckdichter Abschluß auch bei völlig gefülltem Fördergefäß, bei hohem Druck eine schonende Entspannung des Förderdruckes, Sicherheit gegen Fehlschaltungen, eine gute Zugänglichkeit, keine Abluftführung aus dem System durch einen mittels Druckluft bespülten Kegelverschluß mit integriertem Entlüftungsventil;
- eine sichere, verschleißarme Betätigung des Verschlußsystems durch einen problemlosen Balgzylinder als Träger oder Verschlußantrieb.

Die Steuerung kann durch für mehrfache Funktionen ausgelegte Bauteile unter Koppelung mechanischer und pneumatischer Funktionen erfolgen. Empfindliche Füllstandsüberwachungen sind nicht vorgesehen, und der elektrische Steuerungsaufwand ist gering.

Die Erfindung wird in der nachfolgenden Beschreibung bevorzugter Ausführungsbeispiele sowie anhand der Zeichnung näher erläutert; diese zeigt in:

- Fig. 1: einen schematisierten Längsschnitt durch eine erfindungsgemäße Vorrichtung mit - einen oberen Verschlußkopf und eine untere Auslaufklappe aufweisendem - Schleusenbehälter;
- Fig. 2: einen gegenüber Fig. 1 vergrößerten Ausschnitt der Vorrichtung;
- Fig. 3: ein gegenüber Fig. 2 vergrößertes und in eine andere Schnittlinie gelegtes Detail;
- Fig. 4: ein weiteres Detail der Fig. 2;
- Fig. 5: die Vorrichtung in der Fig. 1 entsprechender Darstellung mit gefülltem Schleusenbehälter und abgesenktem Verschlußkopf;
- Fig. 6: die Vorrichtung während eines Einblasvorganges am Verschlußkopf;
- Fig. 7: die Vorrichtung bei geschlossenem Verschlußkopf und geöffneter Auslaufklappe;
- Fig. 8: den entleerten Schleusenbehälter;
- Fig. 9: das Entlüften des Schleusenbehälters durch eine Öffnung des Verschlußkopfes.

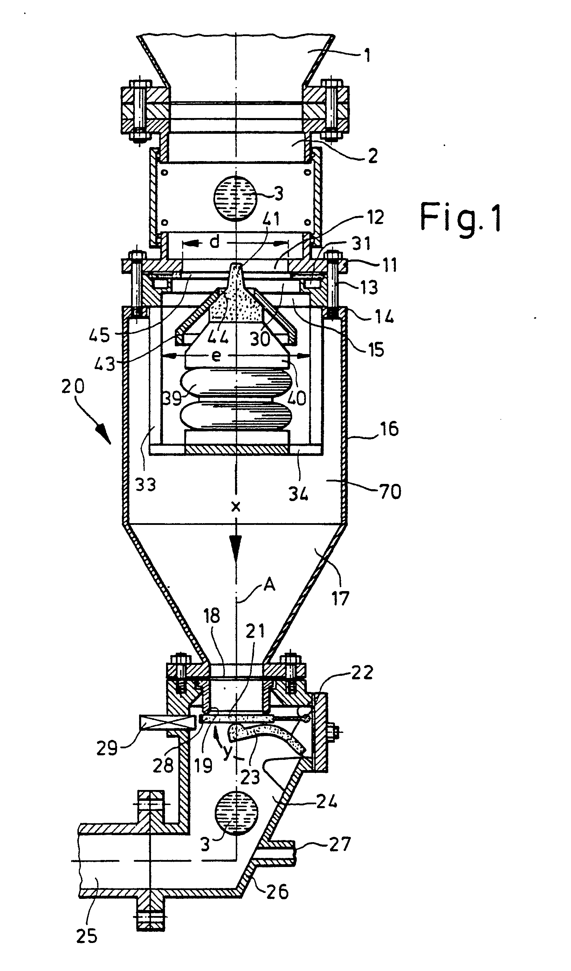

Unter einem Vorratsbehälters 1 für staub- oder granulatartiges Schüttgut ist in Fig. 1 ein Einlaufstutzen 2 mit Schauglas 3 zu erkennen, der auf einer Tragplatte 11 mit zentrischer Ausnehmung 12 eines Durchmessers d von beispielsweise 155 mm koaxial in Längsachse A festliegt.

An der Tragplatte 11 ist mittels Schraubbolzen 13 in einem Abstand i eine Halteplatte 14 mit einem - gegenüber Ausnehmung 12 - größeren Durchbruch 15 eines Durchmessers e von hier 255 mm festgelegt. An die Halteplatte 14 schließt eine Gefäßwandung 16 eines Schleusenbehälters 20 an, die in einem Abstand h - 350 mm - von der Halteplatte 14

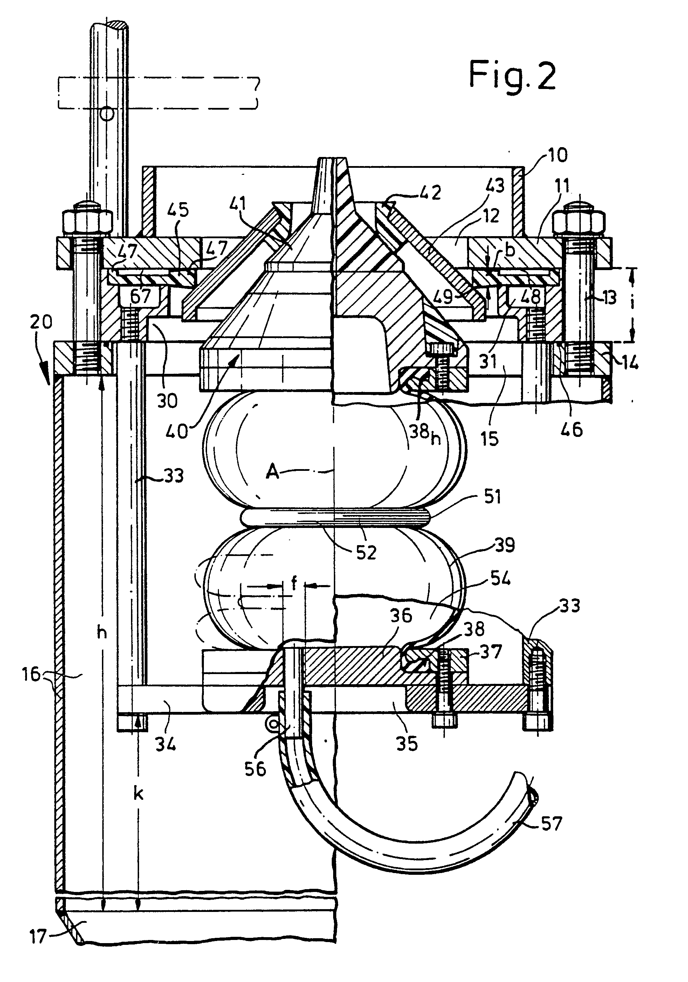

In einen in Fig. 2 nur teilweise angedeuteten Auslaufkonus 17 übergeht. Letzterer endet nach unten hin in einen Austragsstutzen 18 mit ringförmigem horizontalem Mündungsrand 19.

Dem Austragsstutzen 18 ist in Förderrichtung x eine Auslaufklappe 21 nachgeschaltet, die eine seitliche Anlenkung 22 aufweist und die in der in Fig. 1 gezeigten Verschlußstellung von einer Feder 23 gegen den Mündungsrand 19 als Dichtsitz gedrückt ist, wenn der Druck im Schleusenbehälter 20 geringer ist als der Förderdruck in einer seitlich an ein Auslaufgehäuse 24 angeschlossenen Förderleitung 25. Gegenüber der Förderleitung 25 ist in einer schrägen Seitenwand 26 des Auslaufgehäuses 24 eine Zuführleitung 27 für Förderluft zu erkennen.

Während eines Schwenkens der Auslaufklappe 21 in Verschlußstellung (Pfeil y) betätigt die Auslaufklappe 21 mittels eines Endorganes 28 einen - induktiv, kapazitiv, magnetisch oder optisch wirkenden - berührungslos auslösbaren Schalter 29 für einen noch zu beschreibenden Entlüftungsvorgang.

Zwischen Halteplatte 14 und Tragplatte 11 sitzt auf einem begrenzt elastischen Dichtring 46 ein starrer Profilring 30 mit einer nach oben offenen Ringnut 31. Unterhalb deren sind Haltestäbe 33 einer Sockelplatte 34 so festgelegt, daß der Abstand k der Sockelplatte 34 zum Ausslaufkonus 17 etwa dem Maß des Durchmessers d von Ausnehmung 12 entspricht.

Über einem zentrischen Durchbruch 35 der Sockelplatte 34 liegt eine Bodenplatte 36 fest, an die mittels eines Klemmringes 37 der untere Rand 38 eines Balges 39 angeschlossen ist, dessen oberer Rand $38_h$ in einen Kegelkopf 40 eingesetzt ist. Dessen Spitze 41 aus begrenzt elastischem Werkstoff liegt einem Kragen 42 eines sich aufwärts verjüngenden schüsselartigen Verschlußkopfes 43 mit jenen Kragen 42 aufnehmender zentrischer Öffnung 44 an (Fig.1).

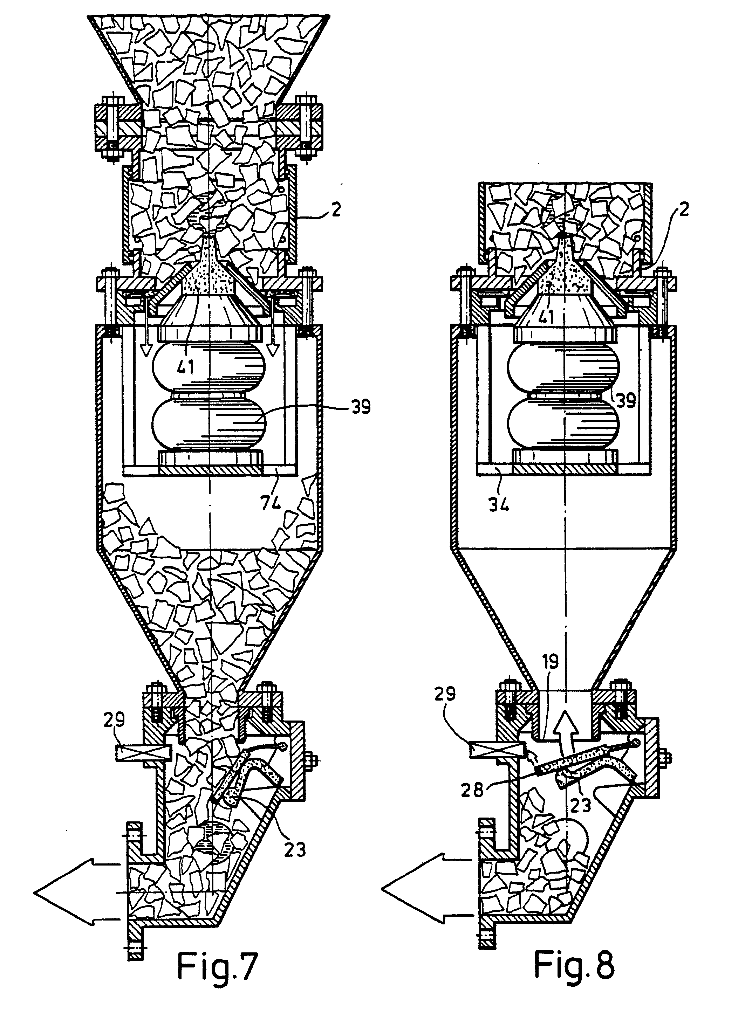

In der in Fig. 2, 4, 7, 8 erkennbaren Verschlußstellung schmiegt sich der Verschlußkopf 43 an ein Rinnenprofil eines Dichtringes 45 an, das die Ringnut 31 des Profilringes 30 überlagert und mit seinen Profilschenkeln 47, die eine Rinne 67 bilden, der Unterseite 48 der Tragplatte 11 anliegt. Die Vorderkante des Rinnenprofils oder Dichtungsringes 45 bildet eine Dichtkante 49, von der aus sich die Dicke b des Profilquerschnittes radial vermindert.

Wie gesagt erstreckt sich vom Kegelkopf 40 zur Bodenplatte 36 hin jener Balg 39 mit einer Einschnürung 51, in welcher ein Ring 52 ruht.

Die Bodenplatte 36 durchsetzt eine Anschlußhülse 56 eines Durchmessers f von 12 mm für einen Luftschlauch 57, mit dem der Innenraum 54 des Balges 39 zu be- und entlüften ist.

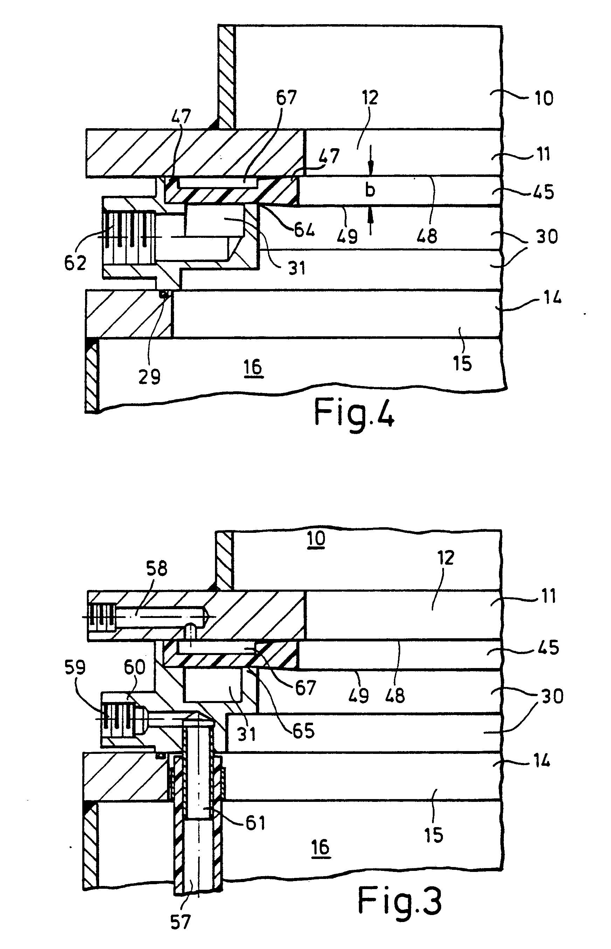

In Fig. 3 erkennt man in der Tragplatte 11 eine Entlüftungsbohrung 58 für einen Kanalraum am Rinnenprofil des Dichtungsringes 45 und eine Bohrung 59 in einer Anformung 60 des Profilringes 30; die Bohrung 59 geht in einen Schlauchanschluß 61 für den Luftschlauch 57 über. Außerdem ist der Profilring 30 mit einem weiteren Anschluß 62 für die Ringnut 31 versehen (Fig. 4).

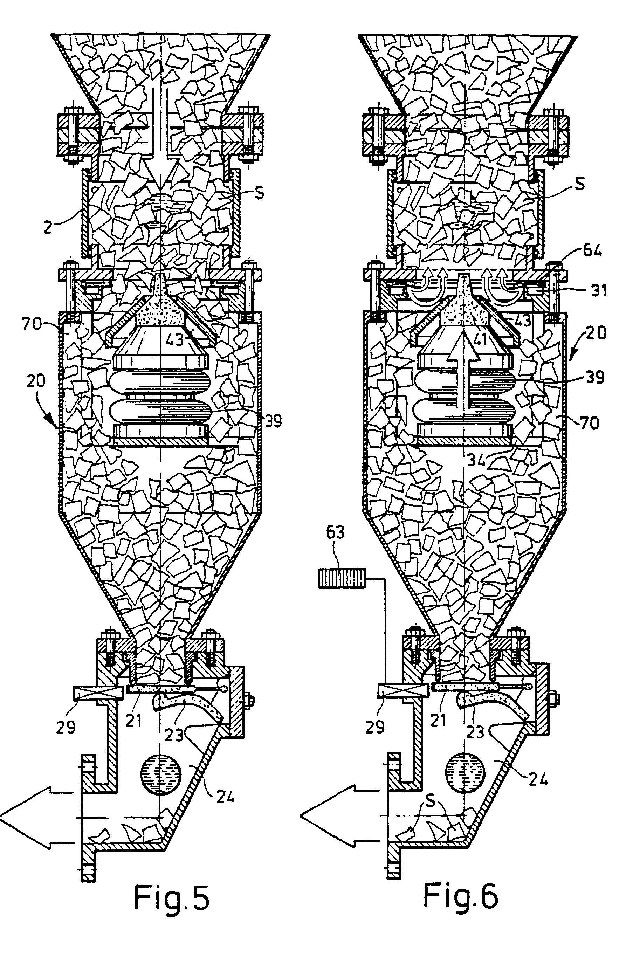

Bei dem in Fig. 5 wiedergegebenen Füllvorgang wird der Innenraum 70 des Schleusenbehälters 20 bei abgesenktem Verschlußkopf 43 gefüllt.

Die Auslaufklappe 21 im Auslaufgehäuse 24 wird von der Schließfeder 23 und dem in der Förderleitung 25 herrschenden Luftdruck auf die Dichtfläche bzw. den Mündungsrand 19 des Austragstutzens 18 gepreßt. Das Schüttgut S läuft ein - der Vorgang ist durch die Schaugläser 3 im Einlaufstutzen 2 zu beobachten.

Nach Ablauf der an einem Zeitrelais 63 einstellbaren Füllzeit bläst gemäß Fig. 6 in die Ringnut 31 als Zufuhrkanal eingebrachte Luft - welche zum Verschlußkopf 43 hin als Luftschleier aus dem Spalt 64 zwischen der inneren Nutkante 65 der Ringnut 31 und dem dabei verformten Dichtungsring 45 austritt - den Raum um den Einlaufkegel oder Verschlußkopf 43 produktfrei, der sich gleichzeitig dank des Balges 39 anhebt und den Innenraum 70 gegen den Einlaufstutzen 2 abdichtet.

Die weiter zuströmende Luft baut im Schleusenbehälter 20 den Förderdruck auf.

Ist der Druck im Schleusenbehälter 20 so hoch wie in der Förderleitung 25, so öffnet sich die Auslaufklappe 21 und das Schüttgut S strömt in die Förderleitung 25.

Wenn der Schüttgut- oder Produktspiegel unter die Auslaufklappe 21 sinkt, wird diese von der Feder 23 an den Dichtsitz des Mündungsrandes 19 gehoben.

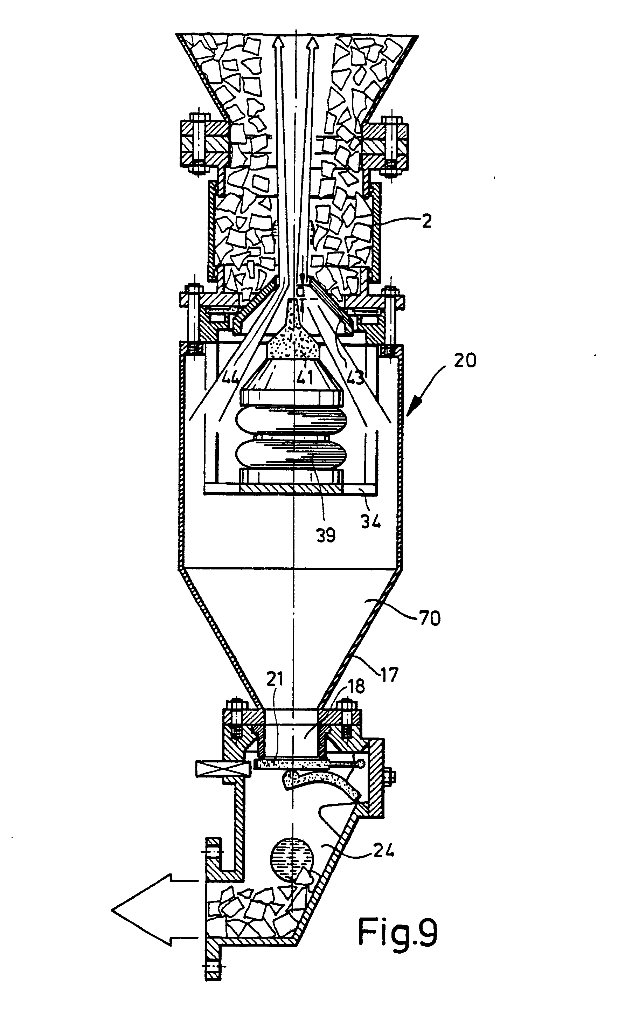

Die aus dem Schleusenbehälter 20 nachströmende Luft reinigt die Klappenoberfläche. Betätigt die Auslaufklappe 21 den Schalter 29, so wird die Lufteinspeisung durch vom Schalter 29 gesteuerte - in der Zeichnung nicht wiedergegebene - Ventile unterbrochen, der Balg 39 entlüftet und die Dichtspitze 41 des Kegelkopfes 40 aus der zentrischen Öffnung 44 des Verschlußkopfes 43 gezogen. Der Verschlußkopf 43 wird durch den noch im Schleusenbehälter 20 herrschenden Luftdruck am Dichtungsrings 45 bzw. der Kegeldichtung gehalten (Fig. 9), bis sich der Überdruck durch jene Öffnung 44 im Verschlußkopf 43 abgebaut hat. Der Weg der ausströmenden Luft wird durch die Pfeile in Fig. 9 besonders deutlich, ebenfalls der Abstand a, den in dieser Verfahrensstufe der tellerartige Verschlußkopf 43 gegenüber der Dichtspitze 41 einnimmt.

Ist der Entlüftungsvorgang beendet, fällt der Verschlußkopf 43 durch sein Eigengewicht auf die Dichtspitze 41, die Füllphase kann wieder beginnen.

**Patentansprüche**

1. Vorrichtung zum Einschleusen eines Schüttgutes aus einem Vorratsbehälter über einen Schleusenraum (20), in eine pneumatische Förderleitung (25), wobei der Schleusenraum (20), wechselweise mittels eines bewegbaren Verschlußkopfes (43) und diesem gegenüberliegender ringförmiger Dichtkante (49) als dessen Sitz gegen den Vorratsbehälter (1) einerseits sowie durch ein an den horizontalen Rand des Austrages des Schleusenraumes (20) anliegendes Verschlußelement gegen die Förderleitung (25) hin anderseits verschließbar ist,

dadurch gekennzeichnet,

daß die Dichtkante (49) Teil einer elastischen Dichtung (Dichtungsring 45) ist und diese eine Wand eines Zuführkanals (Ringnut 31) für einen zum Verschlußkopf (43) gerichteten Luftschleier bildet sowie von der zugeführten Luft so verformbar ist, daß die Luft in Schließstellung des Verschlußkopfes (43) in den Schleusenraum (20, 70) strömen kann, und daß das Verschlußelement gegen die Förderleitung (25) als einends angelenkte Auslaufklappe (21) ausgebildet ist, die von einem Kraftspeicher (Feder 23) untergriffen sowie durch Druck im Schleusenraum zu öffnen ist.

2. Vorrichtung nach Anspruch 1, dadurch gekennzeichnet, daß der Auslaufklappe (21) eine Luftzuführung (27) für die Förderleitung (25) nachgeschaltet ist.

3. Vorrichtung nach Anspruch 1 oder 2, dadurch gekennzeichnet, daß der Zuführkanal eine Ringnut ist und die als Dichtungsring (45) ausgebildete Dichtung unter Bildung eines Blasspaltes (64) in Abstand zu einer Nutkante (65) der Ringnut (31) steht.

4. Vorrichtung nach Anspruch 3, dadurch gekennzeichnet, daß die Dicke (b) des Dichtungsringes (45) an seiner Dichtkante (49) größer ist als seine Dicke in radialem Abstand zur Dichtkante (49), wobei bevorzugt der Dichtungsring (45) von U-förmigem Querschnitt ist und seine U-Schenkel (47) einer den Dichtungsring (45) überspannenden Widerlagerfläche (48) anliegen.

5. Vorrichtung nach Anspruch 3 oder 4, dadurch gekennzeichnet, daß die Ringnut (31) in einem Profilring (30) angeordnet und unter diesem ein Haltegerüst (33) für den Verschlußkopf (43) festgelegt ist.

6. Vorrichtung nach wenigstens einem der Ansprüche 1 bis 5, dadurch gekennzeichnet, daß der Verschlußkopf (43) schüsselartig ausgebildet ist und frei auf einem sich vertikal erstreckenden Träger (Balg 39) aufliegt.

7. Vorrichtung nach wenigstens einem der Ansprüche 1 bis 6, dadurch gekennzeichnet, daß der Verschlußkopf (43) eine zentrische Öffnung (44) aufweist, in welche eine Dichtspitze (41) des Trägers (39) einragt, wobei gegebenenfalls der Verschlußkopf (43) in an sich bekannter Weise eine Kegelspitze ist, welche der Dichtspitze (41) aus elastischem Werkstoff frei aufliegt.

8. Vorrichtung, nach wenigstens einem der Ansprüche 1 bis 7, insbesondere nach Anspruch 5, dadurch gekennzeichnet, daß der Verschlußkopf (43) auf einem längenveränderlichen Träger vorgesehen und ein Trägerinnenraum an wenigstens eine Fluidleitung angeschlossen ist, wobei der Träger als elastisch verformbarer Balg (39) ausgebildet und mit der Dichtspitze (41) fest verbunden ist.

9. Vorrichtung nach wenigstens einem der Ansprüche 1 bis 8, dadurch gekennzeichnet, daß der Balg (39) von einer mit dem Profilring (30) fest verbundenen Sockelplatte (34) aufragt.

10. Vorrichtung nach Anspruch 8 oder 9, dadurch gekennzeichnet, daß der Auslaufklappe (21) in Verschlußstellung ein Sensor (29) oder ein entsprechender Aufnehmer gegenübersteht, welcher mit einem Steuerorgan für die Luftzufuhr an der Dichtkante (49) einerseits sowie für den Träger (39) anderseits verbunden ist, wobei der Sensor bevorzugt mit einem Zeitrelais (63) od. dgl. Element verbunden ist.

11. Vorrichtung zur Steuerung eines Schleusvorganges zum Einschleusen eines Haufwerkes von Schüttgutpartikeln aus einem Vorratsbehälter in eine pneumatische Förderleitung nach einem der Ansprüche 1 bis 10, dadurch gekennzeichnet, daß beim Verschwenken der Auslaufklappe (21) in ihre Verschlußlage ein Impuls auslösbar ist, mit dem die Fluidentnahme am Träger (39) einleitbar ist, gleichzeitig die Fluidzuführung zum Zuführkanal (Ringnut 31) unterbrochen und der Beginn einer Füllzeit markiert ist.

12. Vorrichtung nach Anspruch 11, dadurch gekennzeichnet, daß nach der Füllzeit und nach Öffnen der Fluidzufuhr zum Zuführkanal (Ringnut 31) und zum Träger (39) sich der Träger (39) unter Freigabe der zentrischen Öffnung (44) zur Entlüftung vom Verschlußkopf (43) trennt und/oder, daß der Verschlußkopf (43) nach Absenken des Trägers (39) durch Schwerkraft auf den Träger (39) zurückführbar ist.

## Claims

1. A device for charging bulk material from a supply container via a charging lock chamber (20) into a pneumatic conveyor conduit (25) wherein the charging lock chamber (20) is adapted to be closed off alternatively on the one hand with respect to the supply container (1) by means of a movable closure head (43) and an annular sealing edge (49) which is in opposite relation thereto as a seat therefore, and on the other hand with respect to the conveyor conduit (25) by means of a closure element which bears against the horizontal edge of the discharge of the charging lock chamber (20),

characterized in that

the sealing edge (49) is part of an elastic seal (sealing ring 45) and that the latter forms a wall of a feed duct (annular groove 31) for a curtain of air which is directed towards the closure head (43) and is workable by the air supplied such that in the closure position of the closure head (43) the air can enter into the charging lock chamber (20, 70), and that the closure element against the conveyor condiut (25) is developed as discharge flap (21) which is pivoted at one end, has a force storage means (spring 23) engaging beneath it and can be opened by pressure in the charging lock chamber.

2. A device according to claim 1, characterized in that an air feed means (27) for the conveyor conduit (25) is connected downstream of the discharge flap (21).

3. A device according to claim 1 or 2, characterized in that the feed duct is an annular groove and that the seal which is developed as sealing ring (45), is at a spacing from an edge (65) of the annular groove forming a blowing gap (64).

4. A device according to claim 3, characterized in that the thickness (b) at the sealing edge (49) is greater than the thickness of the sealing ring at a radial spacing from the sealing edge (49), wherein the sealing ring (45) is preferably of U-shaped cross-section and the limb portions (47) of its U-shape bear against a support surface (48) extending over the sealing ring (45).

5. A device according to claim 3 or 4, characterized in that the annular groove (31) is disposed in a shaped ring (30) under which is fixed a mounting support structure (33) for the closure head (43).

6. A device according to at least one of claims 1 to 5, characterized in that the closure head (43) is of a dished configuration and is supported freely on a vertically extending carrier (bellows 39).

7. A device according to at least one of claims 1 to 6, characterized in that the closure head (43) has a central opening (44) into which extends a sealing tip portion (41) of the carrier (39), wherein the closure head (43) is possibly in per se known manner a conical tip member which rests freely on the sealing tip portion (41) which comprises resilient material.

8. A device according to at least one of claims 1 to 7, especially according to claim 5 characterized in that the closure head (43) is provided on a variable-length carrier and a space within the carrier is connected to at least one fluid conduct, wherein the carrier (39) is developed as resiliently deformable bellos (39) and is fixedly connected to the sealing tip portion (41).

9. A dervice according to at least one of claims 1 to 8, characterized in that the bellows (39) projects up from a base plate (34) which is fixedly connected to the shaped ring (30).

10. A device according to claim 8 or 9, characterized in that disposed in opposite relationship to the flap (21) in the closure position is a sensor (29) or a corresponding pick-up means which is connected to a control member for the feed of air at the sealing edge (49) on the one hand and for the carrier (39) on the other hand, wherein the sensor (39) is connected to a timing relay (63) or like element.

11. A device for controlling a charging operation for charging a feed of particles of bulk material from a supply container into a pneumatic conveyor conduit by means of the device according to one of claims 1 to 10, characterized in that upon pivotal movement of the discharge flap (21) into its closure position a pulse can be produced with which the removal of fluid at the carrier (39) can be initiated, at the same time the feed of fluid to the feed duct (annular groove 31) is interrupted and the commencement of a filling time is marked.

12. A device according to claim 11, characterized in that after the filling time and after opening the feed of fluid to the feed duct (annular groove 31) and to the carrier (39) the carrier separates from the closure head (43), exposing the central opening (44) for venting purposes, and/or that after downward movement of the carrier (39) the closure head (43) can be returned to the carrier (39) by the forces of gravity.

**Revendications**

1. Dispositif pour écluser des matières en vrac d'un réservoir dans une tuyauterie de transport pneumatique (25) en passant par une chambre d'écluse (20), la chambre d'écluse (20) étant à obturer tour à tour moyennant une tête de fermeture mobile (43) et l'arête d'étanchéité annulaire (49) opposée à celle-ci et servant de son logement contre le réservoir (1) d'un côté, ainsi que par un élément de fermeture adjacent au bord horizontal de la décharge de la chambre d'écluse (20) contre la tuyauterie de transport (25) d'autre côté,

caractérisé en ce que

l'arête d'étanchéité (49) fait partie d'une garniture élastique (anneau de garniture 45) et que celle-ci forme une paroi d'un canal d'alimentation (rainure annulaire 31) pour un voile d'air et qu'elle est déformable par l'air alimentée d'une telle manière que dans la position de fermeture de la tête de fermeture (43) l'air peut entrer dans la chambre d'écluse (20, 70) et que l'élément de fermeture contre la tuyauterie de transport (25) est formé comme trappe de décharge (21) articulée d'un côté qui est saisi de dessous par un accumulateur d'énergie (ressort 23) et qui peut être ouvert par pression dans la chambre d'écluse.

2. Dispositif selon la revendication 1 caractérisé en ce que une alimentation d'air (27) pour la tuyauterie de transport d'air (25) est placée en aval de la trappe de décharge (21).

3. Dispositif selon la revendication 1 ou 2 caractérisé en ce que le canal d'alimentation est une rainure annulaire et que la garniture en forme d'anneau de garniture (45) se situe à distance d'une arête de rainure (65) de la rainure annulaire (31) en formant un entre fer de soufflage (64).

4. Dispositif selon la revendication 3 caractérisé en ce que l'épaisseur (b) de l'anneau de garniture (45) est plus élevée à son arête d'étanchéité (49) que son épaisseur à distance radiale de l'arête d'étanchéité (49), l'anneau de garniture (45) ayant de préférance une section transversale en forme d'U et ses branches à U (47) collant à une surface de contre-appui (48) qui recouvre l'anneau de garniture (45).

5. Dispositif selon la revendication 3 ou 4 caractérisé en ce que la rainure annulaire (31) se trouve dans un anneau profilé (30) et que au-dessous de celui-ci est placé un dispositif de support (33) pour la tête de fermeture (43).

6. Dispositif selon au moins une des revendications 1 à 5 caractérisé en ce que la tête de fermeture (43) présente une forme semblable à une clé et qu'elle est posée librement sur un support vertical (soufflet 39).

7. Dispositif selon au moins une des revendications 1 à 6 caractérisé en ce que la tête de fermeture (43) possède une ouverture centrée (44) dans laquelle entre une pointe d'étanchéité (41) du support (39) la tête de fermeture (43) étant, le cas échéant, une pointe de cône connue en soi, qui est posée librement sur la pointe d'étanchéité (41) d'une matière élastique.

8. Dispositif selon au moins une des revendications 1 à 7 particulièrement selon la revendication caractérisé en ce que la tête de fermeture (43) est prévue sur un support variable en longueur et que l'intérieur du support est joint à au moins une conduite de fluide, le support étant fait comme soufflet (39) déformable de manière élastique et étant lié de manière file à la pointe d'étanchéité (41).

9. Dispositif selon au moins une des revendications 1 à 8 caractérisé en ce que le soufflet (39) parte d'une plaque de fondation (34) liée de manière fixe à l'anneau profilé (30).

10. Dispositif selon la revendication 8 ou 9 caractérisé en ce que en position de fermeture de la trappe de décharge (21) un détecteur ou un capteur équivalent se trouve en face de celui-ci qui est lié à l'arête d'étanchéité (49) à un organe de commande pour l'apport d'air d'une part et pour le support (39) d'autre part, le détecteur étant lié de préférance à un relais retardé ou à un élément comparable à ceci.

11. Dispositif pour commander une opération d'éclusage pour écluser un amas de particules de matières en vrac d'un réservoir dans une tuyauterie de transport pneumatique (25) selon une des revendications 1 à 10 caractérisé en ce que lors du balayage horizontal de la trappe de décharge (21) dans sa position de fermeture est déclenchable une impulsion avec laquelle on peut provoquer la prise de fluide au support (39), qu'en même temps l'apport de fluide au canal d'alimentation (rainure annulaire 31) est interrompu et qu'il est marqué le commencement d'une période de remplissage.

12. Dispositif selon la revendication 11 caractérisé en ce que après la période de remplissage et après l'ouverture de l'apport de fluide vers le canal d'alimentation (rainure annulaire 31) et vers le support (39), le support (39) se sépare de la tête de fermeture (43) en débloquant l'ouverture centrée (44) pour la ventilation et/ou que la tête de fermeture (43) peut être retournée sur le support (39) après la descente du support (39) par force de gravité.

Fig.1
1
2
3
d
41
12
31
11
13
14
45
44
30
15
43
e
20
39
40
16
33
34
70
x
17
A
18
21
22
29
28
19
y
23
24
3
27
26
25

Fig. 2
10
11
12
13
14
15
16
17
20
30
31
33
34
35
36
37
38
39
40
41
42
43
45
46
47
48
49
51
52
54
56
57
67
A
b
f
h
i
k

10
67
12
47
47
11
b
45
64
49
48
30
62
31
14
29
16
15

Fig.4

10
12
58
11
45
59
60
67
49
48
30
31
65
14
61
16
15
57

Fig.3

S
2
70
43
20
39
29
21
23
24
Fig.5
S
64
31
43
41
20
39
70
34
63
29
21
23
24
S
Fig.6

2
41
39
74
29
23
Fig.7
2
41
39
34
19
29
28
23
Fig.8

2
20
44
41
43
39
34
70
17
21
18
24
Fig.9